# EUROPÄISCHE PATENTSCHRIFT

(11) **EP 0 342 519 B1**
(45) Veröffentlichungstag und Bekanntmachung des Hinweises auf die Patenterteilung: **14.04.1993**
(21) Anmeldenummer: 89108472.5
(22) Anmeldetag: 11.05.1989
(51) Int. Cl.: C04B 26/32, D21H 17/13, C08L 83/04

(54) **Verfahren zur Herstellung von Gebilden aus anorganischem Fasergut auf Siliconharzbasis**
Process for the production of products based on silicone resin, starting from an inorganic fibrous material
Procédé pour la fabrication de produits à base de résine de silicone, à partir d'un matériau fibreux minéral

(30) Priorität: 20.05.1988 DE 3817332
(43) Veröffentlichungstag der Anmeldung: 23.11.1989
(73) Patentinhaber: WACKER-CHEMIE GMBH, D-81737 München (DE)
(72) Erfinder: Demlehner, Ulrich, Dr., D-8261 Kastl (DE); Deubzer, Bernward, Dr., D-8263 Burghausen (DE); Wolfgruber, Matthias, Dr., D-8263 Burghausen (DE)

(56) Entgegenhaltungen:
- EP-A- 0 002 502
- EP-A- 0 242 798
- DE-A- 2 330 887
- FR-A- 1 209 480
- FR-A- 1 464 986
- FR-A- 2 511 384
- GB-A- 648 478
- GB-A- 782 797
- GB-A- 1 025 663

## Beschreibung

Ein Verfahren zur Herstellung von Gebilden aus Asbestfasergut und wäßrigen Silikonharzemulsionen, wobei die wäßrigen Silikonharzemulsionen als Hartungskatalysatoren Chelate des Aluminiums oder Dialkylzinnacylate und als Dispergiermittel nichtionogene Emulgatoren enthalten, durch Tränken des Faserguts mit der Emulsion, wobei die Emulsion gebrochen wird, Verformung des Faserguts unter Wasserentzug, Trocknung der Masse und Härtung des Silikonharzes ist aus US 3 395 071 (ausgegeben 30. Juli 1968, S. Nitzsche et al., Wacker-Chemie GmbH) bekannt. Wäßrige Silikonharzemulsionen und ihre Verwendung als Bindemittel für anorganische faserige Stoffe ist in DE-PS 36 13 384 (entsprechende US Ser. No. 19988), ausgegeben 7. Januar 1988, H. Mayer et al., Wacker-Chemie GmbH beschrieben.

Es bestand die Aufgabe ein Verfahren zur Herstellung von Gebilden aus anorganischem Fasergut auf Silikonharzbasis bereitzustellen, bei dem die Härtung des Silikonharzes in wesentlich kürzerer Zeit als bisher erfolgt, das Verfahren kontinuierlich mit den zur Herstellung von flächenartigen Gebilden aus anorganischem Fasergut und Bindemittel üblichen Fließband-Anlagen durchgeführt werden kann und ein höherer Durchsatz an Gebilden aus anorganischem Fasergut auf Silikonharzbasis als bisher erzielt werden kann. Es bestand weiterhin die Aufgabe ein Bindemittel für anorganische faserige Stoffe bereitzustellen, das eine hohe Thermostabilität aufweist. Diese Aufgaben werden durch die Erfindung gelöst.

Gegenstand der Erfindung ist ein Verfahren zur Herstellung von Gebilden aus anorganischen Fasern, die sich gegebenenfalls im Gemisch mit anorganischen Körnern, Blättchen oder Pulvern befinden, und wäßrigen Silikonharzemulsionen, wobei die wäßrigen Silikonharzemulsionen Härtungskatalysatoren und Emulgatoren enthalten, durch Zufügen der Emulsion zum Fasergut, Verformung des Faserguts und Härtung des Silikonharzes, dadurch gekennzeichnet, daß als Hartungskatalysatoren Salze oder Chelate des dreiwertigen Eisens verwendet werden.

Bei dem erfindungsgemäßen Verfahren werden als Silikonharze vorzugsweise solche der Formel eingesetzt 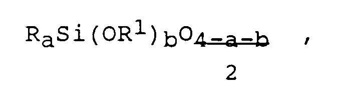
wobei R gleich oder verschieden sein kann und einen Methyl-oder Phenylrest bedeutet, R¹ gleich oder verschieden sein kann und einen Methyl- oder Ethylrest bedeutet, a 0, 1, 2 oder 3, durchschnittlich 0,8 bis 1,5 insbesondere 0,9 bis 1,1, besonders bevorzugt 0,98 bis 1,02 ist und b 0, 1, 2 oder 3, durchschnittlich 0,05 bis 0,4, insbesondere 0,3 bis 0,4, besonders bevorzugt 0,33 bis 0,37 ist. Die Silikonharze haben vorzugsweise eine Viskosität von mindestens 2000 mPa.s bei 25 °C.

Bei dem bei dem erfindungsgemäßen Verfahren eingesetzten Silikonharz kann es sich um eine einzelne Art von Silikonharz handeln. Es kann sich aber auch um ein Gemisch aus mindestens zwei verschiedenen Arten derartiger Silikonharze handeln.

Bevorzugt werden bei dem erfindungsgemäßen Verfahren solche Silikonharze eingesetzt, die hergestellt werden, indem ein niederviskoses Organopolysiloxan der Formel 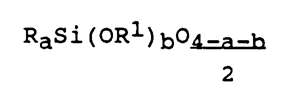
mit einer Viskosität von 10 bis 40 mPa.s bei 25 °C, wobei R und R¹ die oben dafür angegebene Bedeutung haben, a 0, 1, 2 oder 3, durchschnittlich 0,9 bis 1,1 ist und b 0, 1, 2 oder 3, durchschnittlich 0,7 bis 0,9 ist,
mit 60 bis 65 Gewichts-% Ethanol und 4 bis 6 Gewichts-% Wasser in Gegenwart von 0,17 bis 0,20 Gewichts-% Chlorwasserstoff, jeweils bezogen auf das Gesamtgewicht des jeweiligen Silikonharzes, unter Erhitzen umgesetzt wird und die flüchtigen Bestandteile anschließend bei 130 bis 150 °C und 25 bis 30 hPa (abs.) destillativ entfernt werden. Es wird dabei ein alkoxygruppenärmeres und höherviskoses Silikonharz erhalten, von dem sich zusammen mit Emulgator und Wasser nach bekannten Emulgierverfahren eine beständige Silikonharzemulsion herstellen läßt.

Besonders bevorzugt wird dabei als niederviskoses Organopolysiloxan ein Organopolysiloxan der Formel

CH₃Si(OC₂H₅)_{0,8}O_{1,1}

mit einer Viskosität von 20 mPa.s bei 25 °C eingesetzt. Die Herstellung solcher Organopolysiloxane ist bekannt; sie sind beispielsweise durch Umsetzung von Methyltrichlorsilan mit Ethanol und Wasser erhältlich.

Die bei dem erfindungsgemäßen Verfahren eingesetzten, wäßrigen Silikonharzemulsionen enthalten Silikonharz vorzugsweise in Mengen von 10 bis 70 Gewichts-%, insbesondere 40 bis 60 Gewichts-%, besonders bevorzugt 45 bis 55 Gewichts-%, jeweils bezogen auf das Gesamtgewicht der jeweiligen Emulsion.

Bei dem erfindungsgemäßen Verfahren konnen als Emulgatoren alle bisher bekannten Emulgatoren eingesetzt werden mit denen auch bisher beständige, wäßrige Silikonharzemulsionen von Silikonharzen der oben beschriebenen Art hergestellt werden können. Vorzugsweise werden kationische, anionische oder nichtionogene Emulgatoren eingesetzt. Es können auch solche Emulgiermittel, wie sie in der eingangs erwähnten DE-PS 36 13 384 beschrieben sind, eingesetzt werden. ßevorzugt werden nichtionogene Emulgatoren eingesetzt. Besonders bevorzugt werden dabei Emulgatoren auf Polyethylenglykolgrundlage wie Isotridecylalkohol-polyethylenoxid-ether mit im Mittel 16 Ethylenoxideinheiten und Polyvinylalkoholderivate, welche zu 80 bis 95 % verseiftes Polyvinylacetat darstellen, eingesetzt.

Die bei dem erfindungsgemäßen Verfahren eingesetzten, wäßrigen Silikonharzemulsionen enthalten Emulgator in Mengen von vorzugsweise 0,1 bis 20 Gewichts-%, insbesondere 1 bis 10 Gewichts-%, besonders bevorzugt 2 bis 4 Gewichts-%, jeweils bezogen auf das Gesamtgewicht der jeweiligen Emulsion.

Die bei dem erfindungsgemäßen Verfahren eingesetzten, wäßrigen Silikonharzemulsionen werden vorzugsweise dadurch hergestellt, daß zunächst das Silikonharz mit dem Emulgator vermischt und dann die so erhaltene Mischung in Wasser emulgiert wird. Sowohl das zunächst erwähnte Vermischen als auch das Emulgieren kann in üblichen, zur Herstellung von Emulsionen geeigneten Mischgeräten, wie schnellaufenden Stator-Rotor-Rührgeräten nach Prof. P. Willems, wie sie unter dem registrierten Warenzeichen "Ultra-Turrax" bekannt sind, Druckemulgiermaschinen oder Kolloidmühlen, erfolgen.

Bei dem erfindungsgemäßen Verfahren werden als Härtungskatalysatoren Salze des dreiwertigen Eisens, wie vorzugsweise Eisen(III)-chlorid oder Chelate des dreiwertigen Eisens, wie vorzugsweise Eisen(III)-acetylacetonat, Eisen(III)-stearat oder Eisen(III)-(2-ethylhexanoat) eingesetzt. Besonders bevorzugt wird als Härtungskatalysator Eisen(III)-acetylacetonat eingesetzt. Die Chelate des dreiwertigen Eisens werden gegebenenfalls mit einem nicht wasserlöslichen Lösungsmittel, wie Toluol oder Xylol gelöst. Der Härtungskatalysator kann dem Silikonharz auf verschiedene Weise zugesetzt werden. Der Härtungskatalysator bzw. eine Lösung des Härtungskatalysators wird zusammen mit dem Silikonharz emulgiert oder der Härtungskatalysator bzw. eine Lösung des Härtungskatalysators wird mit einem der oben genannten Emulgatoren emulgiert und diese Emulsion wird der wäßrigen Silikonharzemulsion bzw. einer Verdünnung der ursprünglichen Silikonharzemulsion zugegeben oder der Härtungskatalysator bzw. eine Lösung des Härtungskatalysators wird in der wäßrigen Silikonharzemulsion bzw. in einer Verdunnung der ursprünglichen Silikonharzemulsion dispergiert. Die oben beschriebene Vermischung des Härtungskatalysators mit dem Silikonharz kann dabei in einem Vorratsbehälter oder in einer entsprechenden Förderleitung erfolgen. Weiterhin kann die wäßrige Silikonharzemulsion bzw. eine Verdünnung der ursprünglichen Silikonharzemulsion und der Härtungskatalysator bzw. eine Lösung des Härtungskatalysators getrennt voneinander auf das anorganische Fasergut aufgebracht werden, sofern eine ausreichende Vermischung auf der Faser sichergestellt ist.

Der Härtungskatalysator wird bei dem erfindungsgemäßen Verfahren in Mengen von vorzugsweise 0,1 bis 20 Gewichts-%, insbesondere 0,5 bis 4 Gewichts-%, besonders bevorzugt 1 bis 3 Gewichts-%, jeweils bezogen auf das Gesamtgewicht des jeweiligen Silikonharzes, eingesetzt.

Das anorganische Fasergut kann bei dem erfindungsgemäßen Verfahren durch Zufügen des Faserguts zur Silikonharzemulsion mit der Silikonharzemulsion getränkt werden, wobei die Emulsion gebrochen wird. Die Weiterverarbeitung kann dabei wie in der eingangs erwähnten US 3 395 071 erfolgen, d.h. Verformung des so getränkten anorganischen Faserguts unter Wasserentzug, Trocknung der Masse und Härtung des Silikonharzes. Bevorzugt wird das erfindungsgemäße Verfahren kontinuierlich mit den zur Herstellung von flächenartigen Gebilden aus anorganischem Fasergut und Bindemittel üblichen Fließband-Anlagen wie sie beispielsweise in Ullmanns Encyklopädie der technischen Chemie, 4. Auflage, Band 11, Seite 370 beschrieben sind, durchgeführt, wobei als Bindemittel anstelle der üblichen Phenol/Formaldehyd-Harze die bei dem erfindungsgemäßen Verfahren eingesetzten Silikonharzemulsionen verwendet werden. Die Silikonharzemulsion wird dabei auf das anorganische Fasergut nach dem Verlassen des Schmelzofens mittels eines üblichen Dosiersystems aufgesprüht. Das so präparierte Fasergut wird auf den Fließband-Anlagen in üblicher Weise weiterverarbeitet, in dem es in einem Trockenofen auf die gewünschte Rohdichte verdichtet wird und das Silikonharz mittels Durchblasen heißer Gase gehärtet wird. Die Aushärtung des Silikonharzes erfolgt dabei bevorzugt mittels Durchblasen heißer Gase von einer Temperatur von 150 bis 300 °C in einem Zeitraum von 5 bis 8 Minuten. Je höher die Gastemperatur desto kürzer ist die zur Aushartung benötigte Zeit.

Die Silikonharzemulsion kann vor dem Aufbringen auf die anorganischen Fasern mit Wasser verdünnt werden. Die Verdünnung sowie die Geschwindigkeit mit der die gegebenenfalls verdunnten Silikonharzemulsionen auf die anorganischen Fasern aufgesprüht werden, werden so eingestellt, daß die mit der Silikonharzemulsion versetzten anorganischen Fasern nach dem Durchlaufen des Trockenofens einen Silikonharzgehalt von vorzugsweise 1 bis 20 Gewichts-%, insbesondere 3 bis 10 Gewichts-%, besonders bevorzugt 5 bis 8 Gewichts-%, jeweils bezogen auf das Gesamtgewicht der anorganischen Fasern, aufweisen.

Nach dem erfindungsgemäßen Verfahren können anorganische Fasern wie Glaswolle, Steinwolle, Asbestfasern, Quarzfasern oder Glasfasern für sich allein oder im Gemisch mit mindestens zwei verschiedenen anorganischen Fasern oder im Gemisch mit anorganischen Körnern, Blättchen oder Pulvern zu flächenartigen Gebilden oder anderen geformten Körpern verarbeitet werden.

Die nach dem erfindungsgemäßen Verfahren hergestellten Produkte können insbesondere dort eingesetzt werden, wo sie hohen Temperaturen, Angriff durch aggressive Chemikalien oder hoher Feuchtigkeit standhalten müssen. Weiterhin können sie dann vorteilhaft eingesetzt werden, wenn absolute Emissionsfreiheit, d.h. keine Emission von Gasen aus dem Produkt, gefordert ist.

In den folgenden Beispielen beziehen sich alle Angaben von Teilen und Prozentsätzen auf das Gewicht, soweit nichts anderes angegeben ist.

### Beispiel 1

a) 180 kg des im Handel erhältlichen Monomethylsiloxans der Summenformel

   CH₃Si(OC₂H₅)_{0,8}O_{1,1}

   mit einer Viskosität von 20 mPa.s bei 25 °C (käuflich erwerblich unter dem Handelsnamen "Trasil" bei der Fa. Wacker-Chemie GmbH) werden zusammen mit 110 kg Ethanol und 9 kg 1 n wäßriger HCl zum Sieden erhitzt. Nach einer Stunde Reaktionszeit werden bei 85 °C und 1020 hPa (abs.) die leicht flüchtigen Bestandteile abdestilliert und anschließend werden bei 135 °C und 26,7 hPa (abs.) die schwerer flüchtigen Bestandteile abdestilliert. Es wird ein Monomethylsilikonharz mit 36 Mol-% Ethoxygruppen und einer Viskosität von 20 000 mPa.s bei 25 °C erhalten.
b) 250 kg des Monomethylsilikonharzes, dessen Herstellung oben unter a) beschrieben wurde, werden mit 15 kg eines unter dem Handelsnamen "Arlypon IT 16" bei der Fa. Grünau erhältlichen, nichtionogenen Emulgators auf Polyethylenglykolgrundlage (Isotridecylalkohol-polyethylenoxid-ether mit im Mittel 16 Polyethylenoxid-Einheiten) vermischt. Das Silikonharz wird dann wird mit einem Emulgiergerät, wie z.B. einem "Ultra-Turrax", emulgiert, indem unter ständigem Rühren 235 kg Wasser zugegeben werden. Es wird eine wäßrige Silikonharzemulsion mit einem Silikonharzgehalt von 50 Gewichts-%, bezogen auf das Gesamtgewicht der Silikonharzemulsion, erhalten.
c) 40 kg der so erhaltenen, wäßrigen Silikonharzemulsion werden mit 160 kg Wasser verdünnt. Kurz vor der Verwendung werden in dieser verdünnten, wäßrigen Silikonharzemulsion 4 kg einer 10 %igen Lösung von Eisen(III)-acetylacetonat in Toluol durch schnelles Rühren dispergiert. Diese Mischung wird mit einer Geschwindigkeit von 1000 1 je Stunde mittels eines üblichen Dosiersystems auf Steinwolle-Fasern, nachdem die Steinwolle-Fasern den Schmelzofen verlassen haben, aufgesprüht, sodaß ca. 6 Gewichts-% Silikonharz, bezogen auf das Gesamtgewicht der Steinwolle-Fasern, auf diese abgeschieden werden. Aus den benetzten Steinwolle-Fasern werden dann in einem üblichen kontinuierlichen Verfahren Steinwolle-Matten hergestellt, indem die benetzten SteinwolleFasern auf einem Fließband mit Formgebungseinrichtung durch einen Trockenofen laufen, wobei sie mittels Durchblasen 250 °C heißer Gase 8 Minuten lang auf eine mittlere Temperatur von ca. 120 °C erwärmt werden und dabei das Silikonharz gehärtet wird. Nach Verlassen des Trockenofens zeigen die Steinwolle-Fasern in den so gewonnenen Steinewolle-Matten eine gute Bindung untereinander.

Es werden Probekörper aus solchen Steinwolle-Matten mit den Abmessungen 15 cm x 15 cm x 7 cm entnommen und auf ihre Aushärtung hin untersucht. Zur Prüfung der Aushärtung wird die Wasseraufnahme der Probekörper untersucht. Die Wasseraufnahme ist um so geringer, je besser die Aushärtung ist. Die Probekörper werden dazu 24 Stunden lang in Wasser 2 cm unter der Wasseroberfläche gehalten, dann auf einem Gitterrost über Eck gestellt und 15 Minuten abtropfen gelassen. Danach wird eine Wasseraufnahme von 10 % gemessen. Werden die Probekörper 15 Stunden bei 300 °C erhitzt, so verringert sich die Wasseraufnahme noch, was eine weitere Verbesserung der Aushärtung bedeutet. Nach 2 Stunden Erhitzen der Probekörper bei 600 °C ist der Zusammenhalt der Fasern noch gut und die Probekörper weisen noch eine gute Dimensionsstabilität auf.

Im Gegensatz dazu wird die Wasseraufnahme von üblichen Phenolharz-gebundenen Steinwolle-Matten nach 15 Stunden Erhitzen bei 300 °C auf das 20- bis 100-fache erhöht, was einen weitgehenden Abbau des Bindemittels anzeigt. Nach 2 Stunden Erhitzen bei 600 °C haben die Fasern in den üblichen Phenolharz-gebundenen Steinwolle-Matten keinen Zusammenhalt mehr.

### Vergleichsversuch 1

Die Arbeitsweise von Beispiel 1, wie unter c) beschrieben, wird wiederholt mit der Abänderung, daß kein Härtungskatalysator verwendet wird.

Es werden Steinwolle-Matten erhalten, die keine ausreichende Aushärtung und damit Festigkeit aufweisen. Die Wasseraufnahme der Probekörper, die wie in Beispiel 1 unter c) beschrieben bestimmt wurde, beträgt ca. 500 %.

### Vergleichsversuch 2

Die Arbeitsweise von Beispiel 1, wie unter c) beschrieben, wird wiederholt mit der Abänderung, daß anstelle der 4 kg einer 10 %igen Lösung von Eisen(III)-acetylacetonat in Toluol 2,8 kg einer 6 %igen Lösung von KOH in Wasser eingesetzt werden.

Es werden Steinwolle-Matten erhalten, die keine ausreichende Aushärtung und damit Festigkeit aufweisen. Die Wasseraufnahme der Probekörper, die wie in Beispiel 1 unter c) beschrieben bestimmt wurde, beträgt ca. 300 %. Erst nach 15 Stunden Erhitzen der Probekörper bei 250 °C beträgt die Wasseraufnahme der Probekörper 10 %.

### Vergleichsversuch 3

Die Arbeitsweise von Beispiel 1, wie unter c) beschrieben, wird wiederholt mit der Abänderung, daß anstelle der 4 kg der 10 %igen Losung von Eisen(III)-acetylacetonat in Toluol 4 kg einer 10 %igen Lösung von Aluminiumacetylacetonat in Toluol gemäß US 3 395 071, zu der verdünnten, wäßrigen Silikonharzemulsion zugefügt werden.

Es werden Steinwolle-Matten erhalten, die keine ausreichende Aushärtung und damit Festigkeit aufweisen. Die Wasseraufnahme der Probekörper, die wie in Beispiel 1 unter c) beschrieben bestimmt wurde, beträgt ca. 300 %.

### Vergleichsversuch 4

Es wird eine wäßrige Silikonharzemulsion, wie in Beispiel 1 der DE-PS 36 13 384 beschrieben, eingesetzt. Der Silikonharzemulsion wird kein Härtungskatalysator zugesetzt. Das Verfahren zur Herstellung der mit Silikonharz gebundenen Steinwolle-Matten wird dann wie in Beispiel 1 unter c) beschrieben durchgeführt. Es werden Steinwolle-Matten erhalten, die keine ausreichende Aushärtung und damit Festigkeit aufweisen. Die Wasseraufnahme der Probekörper, die wie in Beispiel 1 unter c) beschrieben bestimmt wurde, beträgt ca. 300 %. Erst durch nachträgliches, 2 Stunden langes Erhitzen und Verpressen bei 200 °C betragt die Wasseraufnahme der Probekörper 10 %.

## Patentansprüche

1. Verfahren zur Herstellung von Gebilden aus anorganischen Fasern, die sich gegebenenfalls im Gemisch mit anorganischen Körnern, Blättchen oder Pulvern befinden, und wäßrigen Silikonharzemulsionen, die Härtungskatalysatoren und Emulgatoren enthalten, durch Zufügen der Emulsion zum Fasergut, Verformung des so behandelten Faserguts und anschließende Härtung des Silikonharzes, dadurch gekennzeichnet, daß als Härtungskatalysatoren Salze oder Chelate des dreiwertigen Eisens verwendet werden.

2. Verfahren nach Anspruch 1, dadurch gekennzeichnet, daß als Härtungskatalysator Eisen(III)-acetylacetonat verwendet wird.

3. Verfahren nach Anspruch 1 oder 2, dadurch gekennzeichnet, daß das Verfahren kontinuierlich betrieben wird, wobei die wäßrige Silikonharzemulsion auf das Fasergut aufgesprüht wird, das so präparierte Fasergut auf die gewünschte Rohdichte verdichtet wird und die Aushärtung des Silikonharzes mittels Durchblasen heißer Gase erfolgt.

4. Verfahren nach Anspruch 3, dadurch gekennzeichnet, daß die Härtung des Silikonharzes mittels Durchblasen heißer Gase von einer Temperatur zwischen 150 bis 300 °C in einer Zeitspanne von 5 bis 8 Minuten erfolgt.

5. Verfahren nach einem der Ansprüche 1 bis 4, dadurch gekennzeichnet, daß als wäßrige Silikonharzemulsion solche eingesetzt wird, die erhalten wird, indem ein niederviskoses Organopolysiloxan der Formel 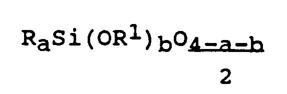 mit einer Viskosität von 10 bis 40 mPa.s bei 25 °C, wobei R gleich oder verschieden sein kann, und einen Methyl- oder Phenylrest bedeutet, R¹ gleich oder verschieden sein kann und einen Methyl- oder Ethylrest bedeutet, a 0, 1, 2 oder 3, durchschnittlich 0,9 bis 1,1 ist und b 0, 1, 2 oder 3, durchschnittlich 0,7 bis 0,9 ist,
mit 60 bis 65 Gewichts-% Ethanol und 4 bis 6 Gewichts-% Wasser in Gegenwart von 0,17 bis 0,20 Gewichts-% Chlorwasserstoff, jeweils bezogen auf das Gesamtgewicht des jeweiligen Silikonharzes, unter Erhitzen umgesetzt wird, die flüchtigen Bestandteile anschließend bei 130 bis 150 °C und 25 bis 30 hPa (abs.) destillativ entfernt werden, das so gewonnene Silikonharz mit Emulgator unter schnellem Rühren vermischt wird und die so erhaltene Mischung in Wasser unter schnellem Rühren emulgiert wird, wobei eine stabile, wäßrige Silikonharzemulsion erhalten wird.

6. Verfahren nach Anspruch 5, dadurch gekennzeichnet, daß als niederviskoses Organopolysiloxan solches der Formel
CH₃Si(OC₂H₅)_{0,8}O_{1,1}
mit einer Viskosität von 20 mPa.s bei 25 °C eingesetzt wird.

## Claims

1. Process for the production of a structure of inorganic fibres, which can optionally be mixed with inorganic grains, leaflets or powders, and an aqueous silicone resin emulsion containing hardening catalysts and emulsifiers, by adding the emulsion to the fibre material, shaping the fibre material thus treated and subsequently hardening the silicone resin, characterised in that salts or chelates of trivalent iron are used as hardening catalyst.

2. Process according to Claim 1, characterised in that iron(III) acetylacetonate is used as hardening catalyst.

3. Process according to either of Claims 1 and 2, characterised in that the process is operated continuously, the aqueous silicone resin emulsion being sprayed onto the fibre material, the fibre material prepared in this way being compacted to the desired bulk density and the hardening of the silicone resin being carried out by blowing through hot gases.

4. Process according to Claim 3, characterised in that the hardening of the silicone resin is carried out by blowing through hot gases at a temperature of between 150 and 300°C over a period of 5 to 8 minutes.

5. Process according to any one of Claims 1 to 4, characterised in that the aqueous silicone resin emulsion used is one which is obtained by reacting a low-viscosity organopolysiloxane of the formula 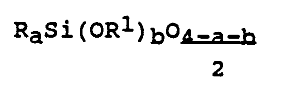 having a viscosity of 10 to 40 mPa.s at 25°C, in which R can be identical or different radicals and denotes a methyl or phenyl radical, R¹ can be identical or different radicals and denotes a methyl or ethyl radical, a is 0, 1, 2 or 3, on average 0.9 to 1.1, and b is 0, 1, 2 or 3, on average 0.7 to 0.9, with 60 to 65% by weight of ethanol and 4 to 6% by weight of water in the presence of 0.17 to 0.20% by weight of hydrogen chloride, in each case based on the total weight of the particular silicone resin, while heating, subsequently removing the volatile constituents by distillation at 130 to 150°C under 25 to 30 hPa (absolute), mixing the resulting silicone resin with emulsifier with rapid stirring and emulsifying the resulting mixture in water with rapid stirring, a stable aqueous silicone resin emulsion being obtained.

6. Process according to Claim 5, characterised in that the low-viscosity organopolysiloxane employed is one of the formula
CH₃Si(OC₂H₅)_{0.8}O_{1.1}
having a viscosity of 20 mPa.s at 25°C.

## Revendications

1. Procédé pour fabriquer des objets à partir de fibres inorganiques, qui se trouvent éventuellement en mélange avec des grains, des paillettes ou des poudres inorganiques, et d'émulsions aqueuses de résines siliconiques qui contiennent des catalyseurs de durcissement et des émulsionnants, par addition de l'émulsion à la matière fibreuse, moulage de la matière fibreuse ainsi traitée, puis durcissement de la résine siliconique, procédé caractérisé en ce qu'on utilise, comme catalyseurs de durcissement, des sels ou des chélates du fer trivalent.

2. Procédé selon la revendication 1 caractérisé en ce qu'on utilise de l'acétylacétonate de fer(III) comme catalyseur de durcissement.

3. Procédé selon l'une des revendications 1 et 2, caractérisé en ce que le procédé est exécuté en continu, l'émulsion aqueuse de résine siliconique étant appliquée par pulvérisation sur la matière fibreuse, la densité brute de la matière fibreuse ainsi traitée étant augmentée jusqu'à la valeur brute souhaitée, et le durcissemnet de la résine siliconique étant produit par insuflation de gaz chauds.

4. Procédé selon la revendication 3 caractérisé en ce que le durcissement de la résine siliconique par insuflation de gaz chauds est effectué à une température comprise entre 150 et 300°C pendant 5 à 8 minutes.

5. Procédé selon l'une quelconque des revendications 1 à 4, caractérisé en ce qu'on utilise, comme émulsion aqueuse de résine siliconique, une émulsion de ce genre que l'on a obtenue en faisant réagir, tout en chauffant, un polyorganosiloxane peu visqueux dont la viscosité est comprise entre 10 et 40 mPa.s à 25°C et, qui répond à la formule : 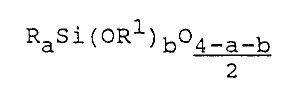 dans laquelle les R peuvent être identiques ou différents et représenter chacun un radical méthyle ou phényle, les R¹ peuvent être identiques ou différents et représenter chacun un radical méthyle ou éthyle, a est égal à 0, à 1, à 2 ou à 3 et a une valeur moyenne comprise entre 0,9 et 1,1, et b est égal à 0, à 1, à 2 ou à 3 et a une valeur moyenne comprise entre 0,7 et 0,9,
avec de 60 à 65% en poids d'éthanol et de 4 à 6% en poids d'eau, en présence de 0,17 à 0,20% en poids de chlorure d'hydrogène, à chaque fois par rapport au poids total de la résine siliconique utilisée, puis en éliminant les constituants volatils par distillation à une température de 130 à 150°C et sous une pression (absolue) de 25 à 30 hPa, en mélangeant la résine siliconique ainsi obtenue avec l'émulsionnant sous agitation rapide et en émulsionnant le mélange ainsi obtenu dans de l'eau sous agitation rapide, opérations qui conduisent à une émulsion aqueuse stable de résine siliconique.

6. Procédé selon la revendication 5 caractérisé en ce qu'on utilise, comme polyorganosiloxane peu visqueux, un polyorganosiloxane de ce genre qui répond à la formule :
CH₃Si(OC₂H₅)_{0,8}O_{1,1}
et qui a une viscosité de 20 mPa.s à 25°C.
